# EUROPEAN PATENT SPECIFICATION

(11) **EP 2 927 807 B1**
(45) Date of publication and mention of the grant of the patent: **21.02.2018**
(21) Application number: 13787181.0
(22) Date of filing: 18.07.2013
(51) Int. Cl.: G06F 9/445

(54) **TERMINAL ACTIVATION METHOD AND TERMINAL**
VERFAHREN ZUR AKTIVIERUNG EINES ENDGERÄTES UND ENDGERÄT
PROCÉDÉ D'ACTIVATION D'UN TERMINAL, ET TERMINAL

(30) Priority: 27.11.2012 CN 201210489197
(43) Date of publication of application: 07.10.2015
(73) Proprietor: ZTE Corporation, Shenzhen, Guangdong 518057 (CN)
(72) Inventor: YANG, Zhenjie, Shenzhen Guangdong 518057 (CN)
(74) Representative: Gevers Patents
(86) International application number: PCT/CN2013/079630
(87) International publication number: WO 2013/167053

(56) References cited:
- EP-A1- 1 942 396
- EP-A1- 2 458 525
- CN-A- 1 885 977
- CN-A- 102 508 591
- CN-A- 102 609 072
- CN-A- 102 981 766
- US-A1- 2006 199 617
- US-A1- 2010 099 394
- US-A1- 2015 133 101

## Description

### TECHNICAL FIELD

The present disclosure relates to the field of electronic devices, and in particular to a terminal and a method for activating a terminal.

### BACKGROUD

Mobile terminals, such as mobile phones, have already been indispensable devices for people, in order to meet increasingly high requirements on mobile terminals, touch screens of current mobile terminals become increasingly large, thin and thus consume more power. To save power, a current mobile terminal may enter a dormancy state when not being used by a user; in order to avoid a misoperation that may awaken the mobile terminal, the mobile terminal is currently configured with a specified dormancy awakening key, through which a user can awaken a mobile terminal in the dormancy state.

US-A-2006/199617 discloses an apparatus and method allowing an improved power key function of a mobile communication terminal. In particular, when the mobile communication terminal is in both the power ON state and the open state and a certain key of the keypad is pressed, a first driving unit drives the backlight of the entire keypad to allow the user to more easily view and operate the keypad. Alternatively, when the mobile communication terminal is in the power OFF state and the open state only the backlight of power key is driven.

EP-A-2458525 discloses a device configured to transition between a locked and unlocked state in response to a detected action that is interpreted as a continuous or single action.

EP-A-1942396 discloses a method of controlling a mobile communication terminal comprising a touch pad, a corresponding touch pad light and a display device. The method comprises independently controlling an active state or an inactive state of the touch pad; an ON state or an OFF state of the touch pad light; and at least an ON state or an OFF state of the display device.

However, as mobile terminals become increasingly thin, the size of a dormancy awakening key becomes increasingly smaller, if a user needs to use a mobile terminal in a dark environment, he/she has to seek blindly for a dormancy awakening key, thus wasting a long time and affecting user experiences.

### SUMMARY

Embodiments of the present disclosure provide a terminal and a method for activating a terminal to facilitate awakening the terminal by a user in a dark environment.

Embodiments of the present disclosure provides a method for activating a terminal, in one embodiment, the method for activating a terminal includes: when the terminal is in a dormancy state, it is detected, in real time whether a screen triggering signal is received that meets a preset condition, the preset condition comprising one of: a screen triggering signal is received upon the user performing a slide operation on a screen of the terminal; and a screen triggering signal is received upon the user performing a long-press clicl operation on the screen of the terminal;, a light emitting module arranged near a dormancy awakening key is lighted when the screen triggering signal is received; an awakening signal generated by pressing the dormancy awakening key by a user is received within a preset period is detected; when the awakening signal is not received within the preset period, the light emitting module is extinguished and, in real time, detecting whether a screen triggering signal is received which meets a preset condiction; and the terminal is activated upon receiving the awakening signal when the awakening signal is received within the preset period.

In an embodiment, the step of detecting whether a screen triggering signal is received that meets a preset condition may include: it is detected whether a screen triggering signal is received; if the screen triggering signal is received, it is determined whether the screen triggering signal meets the preset condition; if the screen triggering signal meets the preset condition, proceed to the step of lighting the light emitting module arranged near the dormancy awakening key.

In an embodiment, the preset condition may include: a screen triggering signal received upon the user performs a slide operation on a screen of the terminal; or a screen triggering signal received upon the user performs a long-press click operation on the screen of the terminal.

In addition, embodiments of the present disclosure further provide a terminal which applies the method for activating a terminal provided by above embodiments, and the terminal includes a detection module, a light emitting module, a dormancy awakening key and an awakening module connected successively, wherein
the detection module is configured to, when the terminal is in a dormancy state, detect in real time whether a screen triggering signal is received that meets a preset condition; and, when the screen triggering signal is received that meets the preset condition, light the light emitting module, the preset condition comprising one of: a screen triggering signal received upon the user performs a slide operation on a screen of the terminal; and a screen triggering signal received upon the user performs a long-press click operation on the screen of the terminal;
the light emitting module is arranged near the dormancy awakening key and configured to be lighted under the control of the detection module;
the dormancy awakening key is configured to transmit an awakening signal to the awakening module when the dormancy awakening key is pressed by a user;
the detection module is further configured to, after the light emitting module is lighted, determine whether the awakening module receives the awakening signal within a preset period; when the awakening signal is not received within the preset period, extinguish the light emitting module and detect again in real time whether a screen triggering signal is received that meets a preset condition;
the light emitting module is further configured to be extinguished under the control of the detection module; and
the awakening module is configured to awaken a terminal where it is located upon receiving the awakening signal transmitted by the dormancy awakening key within the preset period.

In an embodiment, the detection module may include a reception submodule and a determination submodule, wherein
the reception submodule is configured to detect whether a screen triggering signal is received, and if the screen triggering signal is received, transmit a received screen triggering signal to the determination submodule;
the determination submodule is configured to determine whether the screen triggering signal transmitted by the reception submodule meets the preset condition; and if the preset condition is met, light the light emitting module.

In an embodiment, the dormancy awakening key is a touch key on a screen or a physical key beyond the screen.

In an embodiment, the dormancy awakening key is a power-on key of the terminal.

In an embodiment, the light emitting module is an indicating lamp arranged near the dormancy awakening key.

Through implementation of the present disclosure, a light emitting module is added near a dormancy awakening key of a terminal, when a user needs to activate the terminal in a dark environment, he/she only needs to perform on the screen a slide operation or a long-press click operation that meets a condition so that the light emitting module can be lighted, and with the guidance of the light emitting module, the terminal is easily activated through the dormancy awakening key, thus avoiding blind operation and improving user experiences.

### BRIEF DESCRIPTION OF THE DRAWINGS

Fig. 1 is a schematic diagram of a terminal provided by an embodiment of the present disclosure;
Fig. 2 is a schematic diagram of a detection module in Fig. 1;
Fig. 3 is a schematic diagram of a method for activating a terminal provided by an embodiment of the present disclosure;
Fig. 4 is a schematic diagram of a terminal provided by a preferred embodiment of the present disclosure; and
Fig. 5 is a schematic diagram of a method for activating a terminal provided by a preferred embodiment of the present disclosure.

### DETAILED DESCRIPTION

Embodiments of the present disclosure provide a terminal and a method for activating a terminal in which by lighting a light emitting indicating lamp arranged near a dormancy awakening key of the terminal through performing a touch operation and thus the terminal is activated with the guidance of the light emitting indicating lamp, thereby solving a problem that a user desired to activate a terminal in a dark environment has to seek blindly for a dormancy awakening key. The present disclosure will be further elaborated below through specific embodiments in combination with accompanying drawings.

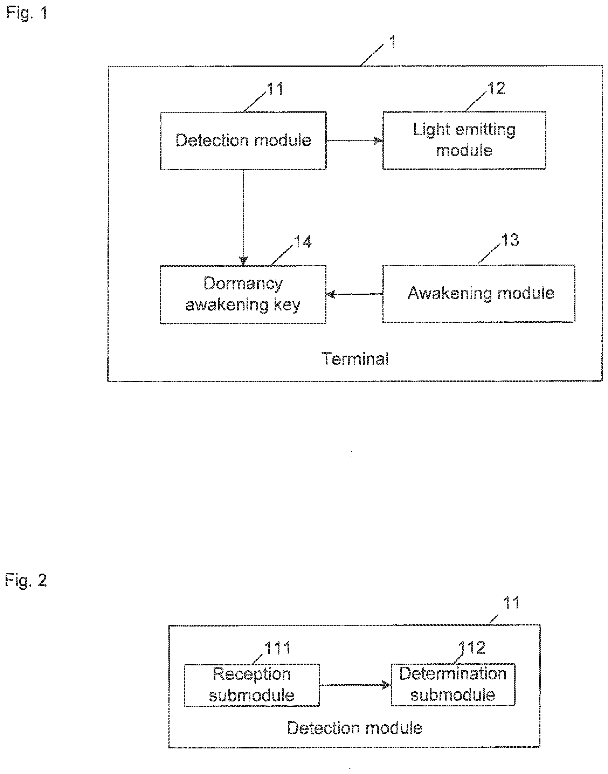

Fig. 1 is a schematic diagram of a terminal provided by an embodiment of the present disclosure; it can be seen from Fig. 1 that in the embodiment, the terminal 1 provided by the present disclosure includes a detection module 11, a light emitting module 12, a dormancy awakening key 13 and an awakening module 14 connected successively, wherein
the detection module 11 is configured to, when the terminal is in a dormancy state, detect in real time or periodically whether a screen triggering signal is received that meets a preset condition; and when the screen triggering signal is received that meets the preset condition, light the light emitting module 12, e.g., transmit a lighting signal to the light emitting module 12;
the light emitting module 12 is arranged near the dormancy awakening key 13 and configured to be lighted under the control of the detection module 13, for example, after the lighting signal of the detection module 11 is received, light itself and indicate the position of the dormancy awakening key 13.
the dormancy awakening key 13 is configured to transmit an awakening signal to the awakening module 14 when being pressed by a user; and
the awakening module 14 is configured to awaken the terminal 1 where it is located upon receiving the awakening signal transmitted by the dormancy awakening key 13.

Fig. 2 is a schematic diagram of the detection module 11 in Fig. 11; as shown in Fig. 2, in order to whether a screen triggering signal is received that meets a preset condition, in the embodiment, the detection module 11 includes a reception submodule 111 and a determination submodule 112, wherein
the reception submodule 111 is configured to, if it is detected that the screen triggering signal is received, transmit a received screen triggering signal to the determination submodule 112, for example, receive in real time or periodically the screen triggering signal and transmit a received screen triggering signal to the determination submodule 112;
the determination submodule 112 is configured to, if it is determined that the screen triggering signal transmitted by the reception submodule 111 meets the preset condition, light the light emitting module 112, for example transmit a lighting signal to the light emitting module 12.

Further, the screen triggering signal that meets the preset condition in above embodiments may include: a screen triggering signal received upon the user performs a slide operation on a screen of the terminal; or a screen triggering signal received upon the user performs a long-press click operation on the screen of the terminal.

Further, in order to avoid a misoperation and thus save electrical energy, the detection module 11 in the above embodiments is configured to, after the light emitting module 12 is lighted, if it is detected that the awakening module 14 does not receive the awakening signal within a preset period, extinguish the light emitting module 12; accordingly, the light emitting module 12 is configured to be extinguished under the control of the detection module 11.

Specifically, the detection module 11 can be configured to detect whether the awakening module 14 receives an awakening signal within a preset period after a lighting instruction is transmitted, and transmit an extinguishing signal to the light emitting module 12 if the awakening module 14 does not receive the awakening signal within the preset period; accordingly, the light emitting module 12 goes out upon receiving the extinguishing signal.

In the embodiment, the awakening module 14 is configured to, when the awakening signal is not received within the preset period, represent that a user is not currently desirable to activate the terminal, that is to say, a received screen triggering signal that meets the preset condition is a misoperation by the user, then the light emitting module 12 is extinguished so as to avoid a waste of electrical energy.

Further, the dormancy awakening key 13 in the above embodiments is a touch key on a screen or a physical key beyond the screen.

Further, the dormancy awakening key 13 in the above embodiments is a power-on key of the terminal.

Further, the light emitting module 12 in the above embodiments is an indicating lamp arranged near the dormancy awakening key 13.

Further, the detection module 11 in the above embodiments is a Programmable Logic Controller (PLC) or other types of microcontroller.

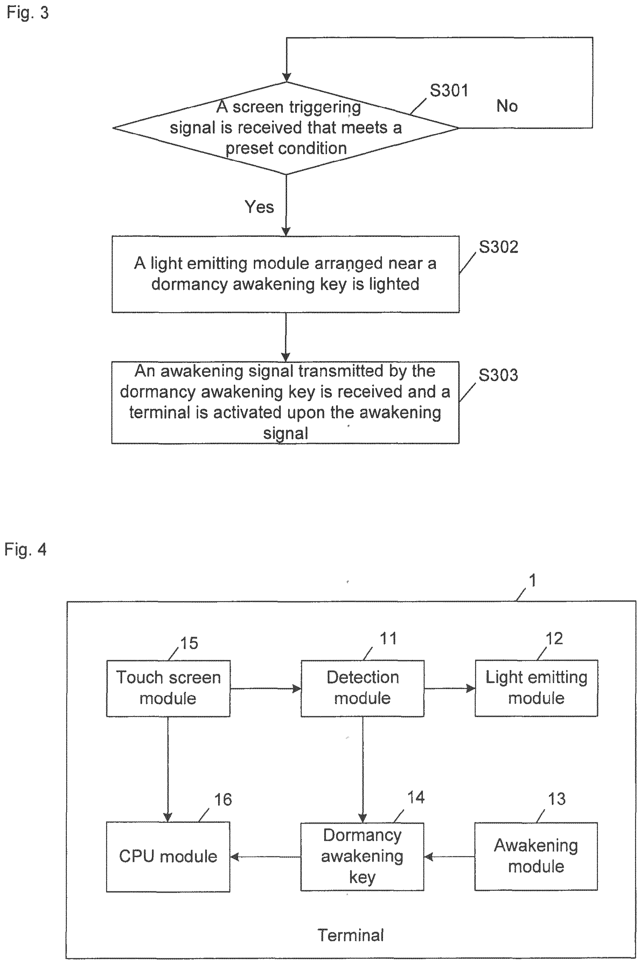

In addition, embodiments of the present disclosure also provides a method for activating a terminal, which will be now described with reference to Fig. 3; Fig. 3 is a schematic diagram of a method for activating a terminal provided by an embodiment of the present disclosure, as shown in Fig, 3, in the embodiment, the method for activating a terminal provided by the embodiment includes the following steps:
step S301, when a terminal is in a dormancy state, it is detected in real time whether a screen triggering signal is received that meets a preset condition; if the screen triggering signal is received that meets the preset condition, proceed to step S302; otherwise, proceed to step S301.

In an embodiment, the detecting whether a screen triggering signal is received that meets a preset condition may specifically include:
it is detected whether a screen triggering signal is received;
if the screen triggering signal is received, determining whether the screen triggering signal meets the preset condition;
if the preset condition is met, proceed to S302, otherwise, continue implementing step S301.

Further, the signal that meets the preset condition may include: a screen triggering signal received upon the user performs a slide operation on a screen of the terminal; or a screen triggering signal received upon the user performs a long-press click operation on the screen of the terminal.

Step S302, a light emitting module arranged near a dormancy awakening key is lighted;
In an embodiment, after the light emitting module arranged near the dormancy awakening key is lighted, the method for activating a terminal provided by the embodiment of the present disclosure may further include:
it is detected whether an awakening signal transmitted by the dormancy awakening key is received within a preset period;if the awakening signal is not received within the preset period, the light emitting module is extinguished; if it is received, proceed to step S303.

Step S303, the awakening signal transmitted by the dormancy awakening key is received and the terminal is activated upon receiving the awakening signal.

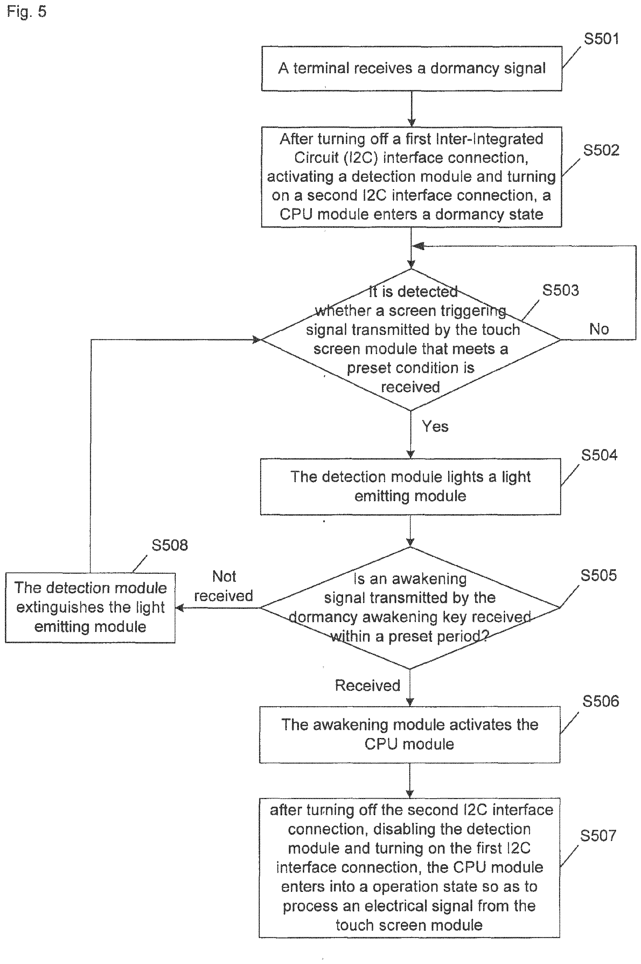

In order to further explain spirits of embodiments of the present disclosure, application scenarios of embodiments of the present disclosure will be elaborated with reference to Fig. 4 and Fig. 5.

Fig. 4 is a schematic diagram of a terminal provided by a preferred embodiment of the present disclosure; it can be known from Fig. 4 that in practical applications, besides the detection module 11, the light emitting module 12, the dormancy awakening key 13 and the awakening module 14 connected successively as described in above embodiments, the terminal 1 further includes a touch screen module 15 for implementing the conversion of a touch operation on a touch screen by the user to a electrical signal as well as a CPU module 16 for implementing data and signal processing functions.

Wherein specific functions of the touch screen module 15 and the CPU module 16 are not key points of the present disclosure, thus detailed descriptions thereof will be omitted.

The connection relationship of respective functional modules above is as shown in Fig. 4, the CPU module 16 and the touch screen module 15 are connected via an I2C interface, in order to simplify explanation thereafter, it is noted as a first I2C interface; the detection module 11 and the touch screen module 15 are also connected via an I2C interface, in order to simplify explanation thereafter, it is noted as a second I2C interface.

Fig. 5 is a schematic diagram of a method for activating a terminal provided by a preferred embodiment of the present disclosure; as shown in Fig. 5, in practical applications, the method for activating a terminal provided by embodiments of the present disclosure includes the following steps:
Step S501, terminal 1 receives a dormancy signal.

Wherein the method for receiving a dormancy signal will be omitted.

Step S502, after turning off a first Inter-Integrated Circuit (12C) interface connection, activating a detection module 11 and turning on a second I2C interface connection, a CPU module 16 enters a dormancy state.

Step S503, the detection module 11 detects in real time whether a screen triggering signal transmitted by the touch screen module 15 that meets a preset condition is received, when it is received, proceed to step S504, otherwise, continue implementing step S503.

Step S504, the detection module 11 lights a light emitting module 12.

Step S505, the detection module 11 detects whether an awakening signal transmitted by the dormancy awakening key 13 is received by an awakening module 14 within a preset period; if the awakening signal is not received, proceed to step S503; if it is received, proceed to step S506.

Step S506, the awakening module 14 activates the CPU module 16.

Step S507, after turning off the second I2C interface connection, disabling the detection module 11 and turning on the first I2C interface connection, the CPU module 16 enters into a operation state so as to process an electrical signal from the touch screen module 15, and then the processing process ends.

Step S508, the detection module 11 extinguishes the light emitting module 12, then returns to step S503.

It can known from above description that the embodiments of the present disclosure at least have the following beneficial effects:
a light emitting module arranged near a dormancy awakening key can be lighted by performing by a user a simple operation on a touch screen when a terminal is in a dormancy state, thus the dormancy awakening key can be used to conveniently awaken the terminal.

Further, the terminal automatically detects whether an awakening signal is received within a preset period, if the awakening signal is not received, it is determined that it is a misoperation, then the light emitting module is extinguished so as to avoid a waste of electrical energy caused by the misoperation of the user.

The above are merely specific embodiments of the present disclosure, and are not intended to limit the present disclosure. Any simple changes, equivalent variations or modifications of the above embodiments based on the technical essence thereof all belong to the scope of protection of the technical solutions of the embodiments of the present disclosure.

## Claims

1. A method for activating a terminal, comprising:
detecting (S301; S503) in real time whether a screen triggering signal is received that meets a preset condition when the terminal is in a dormancy state, the preset condition comprising one of:
a screen triggering signal received upon the user performs a slide operation on a screen of the terminal; and
a screen triggering signal received upon the user performs a long-press click operation on the screen of the terminal;
lighting (S302; S504) a light emitting module arranged near a dormancy awakening key when the screen triggering signal is received;
detecting (S505) whether an awakening signal generated by pressing the dormancy awakening key by a user is received within a preset period;
when the awakening signal is not received within the preset period, extinguishing (S508) the light emitting module and detecting again in real time whether a screen triggering signal is received that meets a preset condition; and
when the awakening signal is received within the preset period, activating the terminal upon receiving the awakening signal.

2. The method according to claim 1, wherein the step of detecting (S301) whether a screen triggering signal is received that meets a preset condition includes:
detecting whether a screen triggering signal is received;
determining whether the screen triggering signal meets the preset condition when the screen triggering signal is received;
lighting the light emitting module arranged near the dormancy awakening key when the screen triggering signal meets the preset condition.

3. A terminal comprising a detection module (11), a light emitting module (12), a dormancy awakening key (13) and an awakening module (14) connected successively, wherein
the detection module (11) is configured to, when the terminal is in a dormancy state, detect in real time whether a screen triggering signal is received that meets a preset condition, and light the light emitting module (12) when the screen triggering signal is received that meets the preset condition, the preset condition comprising one of:
a screen triggering signal received upon the user performs a slide operation on a screen of the terminal; and
a screen triggering signal received upon the user performs a long-press click operation on the screen of the terminal;
the light emitting module (12) is arranged near the dormancy awakening key and configured to be lighted under the control of the detection module (11);
the dormancy awakening key (13) is configured to transmit an awakening signal to the awakening module (14) when the dormancy awakening key (13) is pressed by a user;
the detection module (11) is further configured to, after the light emitting module (12) is lighted, determine whether the awakening module (14) receives the awakening signal within a preset period; when the awakening signal is not received within the preset period, extinguish the light emitting module (12) and detect again in real time whether a screen triggering signal is received that meets a preset condition;
the light emitting module (12) is further configured to be extinguished under the control of the detection module (11); and
the awakening module (14) is configured to awaken the terminal upon receiving the awakening signal transmitted by the dormancy awakening key (13) within the preset period.

4. The terminal according to claim 3, wherein the detection module (11) comprises a reception submodule (111) and a determination submodule (112), wherein
the reception submodule (111) is configured to detect whether a screen triggering signal is received, and transmit a received screen triggering signal to the determination submodule (112) when the screen triggering signal is received;
the determination submodule (112) is configured to determine whether the screen triggering signal transmitted by the reception submodule (111) meets the preset condition, and light the light emitting module (12) when the preset condition is met.

5. The terminal according to claim 3 or 4, wherein the dormancy awakening key (13) is a touch key on a screen or a physical key beyond the screen.

6. The terminal according to claim 5, wherein the dormancy awakening key (13) is a power-on key of the terminal.

7. The terminal according to claim 3 or 4, wherein the light emitting module (12) is an indicating lamp arranged adjacent to the dormancy awakening key.

## Patentansprüche

1. Verfahren zum Aktivieren eines Endgeräts, umfassend folgende Schritte:
Detektieren (S301; S503) in Echtzeit, ob ein Bildschirmauslösesignal empfangen wird, das eine voreingestellte Bedingung erfüllt, wenn sich das Endgerät in einem Ruhezustand befindet, wobei die voreingestellte Bedingung eines umfasst von:
- einem Bildschirmauslösesignal, das empfangen wird, wenn der Benutzer einen Gleitvorgang an einem Bildschirm des Endgeräts ausführt; und
- einem Bildschirmauslösesignal, das empfangen wird, wenn der Benutzer einen anhaltenden Klickvorgang an dem Bildschirm des Endgeräts ausführt;
Einschalten (S302; S504) eines lichtemittierenden Moduls, das in der Nähe einer Taste zum Wecken aus dem Ruhezustand angeordnet ist, wenn das Bildschirmauslösesignal empfangen wird;
Detektieren (S505), ob ein Wecksignal, das durch Drücken der Taste zum Wecken aus dem Ruhezustand durch einen Benutzer generiert wird, innerhalb einer voreingestellten Periode empfangen wird;
wenn das Wecksignal nicht innerhalb der voreingestellten Periode empfangen wird, Ausschalten (S508) des lichtemittierenden Moduls und erneutes Detektieren in Echtzeit, ob ein Bildschirmauslösesignal empfangen wird, das eine voreingestellte Bedingung erfüllt; und
wenn das Wecksignal innerhalb der voreingestellten Periode empfangen wird, Aktivieren des Endgeräts beim Empfangen des Wecksignals.

2. Verfahren nach Anspruch 1, wobei der Schritt des Detektierens (S301), ob ein Bildschirmauslösesignal empfangen wird, das eine voreingestellte Bedingung erfüllt, Folgendes umfasst:
Detektieren, ob ein Bildschirmauslösesignal empfangen wird;
Bestimmen, ob das Bildschirmauslösesignal die voreingestellte Bedingung erfüllt, wenn das Bildschirmauslösesignal empfangen wird;
Einschalten des lichtemittierenden Moduls, das in der Nähe der Taste zum Wecken aus dem Ruhezustand angeordnet ist, wenn das Bildschirmauslösesignal die voreingestellte Bedingung erfüllt.

3. Endgerät, umfassend ein Detektionsmodul (11), ein lichtemittierendes Modul (12), eine Taste (13) zum Wecken aus dem Ruhezustand und ein Weckmodul (14), die nacheinander verbunden sind, wobei
das Detektionsmodul (11) konfiguriert ist, wenn sich das Endgerät in einem Ruhezustand befindet, um in Echtzeit zu detektieren, ob ein Bildschirmauslösesignal empfangen wird, das eine voreingestellte Bedingung erfüllt, und um das lichtemittierende Modul (12) einzuschalten, wenn das Bildschirmauslösesignal empfangen wird, das die voreingestellte Bedingung erfüllt, wobei die voreingestellte Bedingung eines umfasst von:
- einem Bildschirmauslösesignal, das empfangen wird, wenn der Benutzer einen Gleitvorgang an einem Bildschirm des Endgeräts ausführt; und
- einem Bildschirmauslösesignal, das empfangen wird, wenn der Benutzer einen anhaltenden Klickvorgang an dem Bildschirm des Endgeräts ausführt;
das lichtemittierende Modul (12) in der Nähe der Taste zum Wecken aus dem Ruhezustand angeordnet ist und konfiguriert ist, um unter der Kontrolle des Detektionsmoduls (11) eingeschaltet zu werden;
die Taste (13) zum Wecken aus dem Ruhezustand konfiguriert ist, um ein Wecksignal an das Weckmodul (14) zu senden, wenn die Taste (13) zum Wecken aus dem Ruhezustand durch einen Benutzer gedrückt wird;
das Detektionsmodul (11) ferner konfiguriert ist, nachdem das lichtemittierende Modul (12) eingeschaltet wurde, um zu bestimmen, ob das Weckmodul (14) das Wecksignal innerhalb einer voreingestellten Periode empfängt; wenn das Wecksignal nicht innerhalb der voreingestellten Periode empfangen wird, um das lichtemittierende Modul (12) auszuschalten und erneut in Echtzeit zu detektieren, ob ein Bildschirmauslösesignal empfangen wird, das eine voreingestellte Bedingung erfüllt;
das lichtemittierende Modul (12) ferner konfiguriert ist, um unter der Kontrolle des Detektionsmoduls (11) ausgeschaltet zu werden; und
das Weckmodul (14) konfiguriert ist, um das Endgerät zu wecken, wenn das Wecksignal, das durch die Taste (13) zum Wecken aus dem Ruhezustand gesendet wird, innerhalb der voreingestellten Periode empfangen wird.

4. Endgerät nach Anspruch 3, wobei das Detektionsmodul (11) ein Empfangsuntermodul (11) und ein Bestimmungsuntermodul (112) umfasst, wobei
das Empfangsuntermodul (111) konfiguriert ist, um zu detektieren, ob ein Bildschirmauslösesignal empfangen wird, und um ein empfangenes Bildschirmauslösesignal an das Bestimmungsuntermodul (112) zu senden, wenn das Bildschirmauslösesignal empfangen wird;
das Bestimmungsuntermodul (112) konfiguriert ist, um zu bestimmen, ob das Bildschirmauslösesignal, das von dem Empfangsuntermodul (111) gesendet wird, die voreingestellte Bedingung erfüllt, und um das lichtemittierende Modul (12) einzuschalten, wenn die voreingestellte Bedingung erfüllt ist.

5. Endgerät nach Anspruch 3 oder 4, wobei die Taste (13) zum Wecken aus dem Ruhezustand eine Schaltfläche an einem Bildschirm oder eine physische Taste außerhalb des Bildschirms ist.

6. Endgerät nach Anspruch 5, wobei die Taste (13) zum Wecken aus dem Ruhezustand die Einschalttaste des Endgeräts ist.

7. Endgerät nach Anspruch 3 oder 4, wobei das lichtemittierende Modul (12) ein Leuchtmelder ist, der neben der Taste zum Wecken aus dem Ruhezustand angeordnet ist.

## Revendications

1. Procédé d'activation d'un terminal, comprenant :
le fait de détecter (S301 ; S503) en temps réel si un signal de déclenchement d'écran est reçu qui satisfait une condition préétablie lorsque le terminal est dans un état de dormance, la condition préétablie comprenant l'un parmi :
un signal de déclenchement d'écran reçu lorsque l'utilisateur réalise une opération de glissement sur un écran du terminal ; et
un signal de déclenchement d'écran reçu lorsque l'utilisateur réalise une opération de clic à appui long sur l'écran du terminal ;
l'allumage (S302 ; S504) d'un module d'émission de lumière agencé près d'une touche de réveil de dormance lorsque le signal de déclenchement d'écran est reçu ;
le fait de détecter (S505) si un signal de réveil généré par un utilisateur appuyant sur la touche de réveil de dormance est reçu dans une période préétablie ;
lorsque le signal de réveil n'est pas reçu dans la période préétablie, le fait d'éteindre (S508) le module d'émission de lumière et le fait de détecter à nouveau en temps réel si un signal de déclenchement d'écran est reçu qui satisfait une condition préétablie ; et
lorsque le signal de réveil est reçu dans la période préétablie, l'activation du terminal lors de la réception du signal de réveil.

2. Procédé selon la revendication 1, dans lequel l'étape de détection (S301) pour savoir si un signal de déclenchement d'écran est reçu qui satisfait une condition préétablie comporte :
le fait de détecter si un signal de déclenchement d'écran est reçu ;
le fait de déterminer si le signal de déclenchement d'écran satisfait la condition préétablie lorsque le signal de déclenchement d'écran est reçu ;
l'allumage du module d'émission de lumière agencé près de la touche de réveil de dormance lorsque le signal de déclenchement d'écran satisfait la condition préétablie.

3. Terminal comprenant un module de détection (11), un module d'émission de lumière (12), une touche de réveil de dormance (13) et un module de réveil (14) connectés successivement, dans lequel
le module de détection (11) est configuré, lorsque le terminal est dans un état de dormance, pour détecter en temps réel si un signal de déclenchement d'écran est reçu qui satisfait une condition préétablie, et allumer le module d'émission de lumière (12) lorsque le signal de déclenchement d'écran est reçu qui satisfait la condition préétablie, la condition préétablie comprenant l'un parmi :
un signal de déclenchement d'écran reçu lorsque l'utilisateur réalise une opération de glissement sur un écran du terminal ; et
un signal de déclenchement d'écran reçu lorsque l'utilisateur réalise une opération de clic à appui long sur l'écran du terminal ;
le module d'émission de lumière (12) est agencé près de la touche de réveil de dormance et configuré pour être allumé sous la commande du module de détection (11) ;
la touche de réveil de dormance (13) est configurée pour transmettre un signal de réveil au module de réveil (14) lorsqu'un utilisateur appuie sur la touche de réveil de dormance (13) ;
le module de détection (11) est en outre configuré, après que le module d'émission de lumière (12) est allumé, pour déterminer si le module de réveil (14) reçoit le signal de réveil dans une période préétablie ; lorsque le signal de réveil n'est pas reçu dans la période préétablie, pour éteindre le module d'émission de lumière (12) et détecter à nouveau en temps réel si un signal de déclenchement d'écran est reçu qui satisfait une condition préétablie ;
le module d'émission de lumière (12) est en outre configuré pour être éteint sous la commande du module de détection (11); et
le module de réveil (14) est configuré pour réveiller le terminal lors de la réception du signal de réveil transmis par la touche de réveil de dormance (13) dans la période préétablie.

4. Terminal selon la revendication 3, dans lequel le module de détection (11) comprend un sous-module de réception (111) et un sous-module de détermination (112), dans lequel
le sous-module de réception (111) est configuré pour détecter si un signal de déclenchement d'écran est reçu, et transmettre un signal de déclenchement d'écran reçu au sous-module de détermination (112) lorsque le signal de déclenchement d'écran est reçu ;
le sous-module de détermination (112) est configuré pour déterminer si le signal de déclenchement d'écran transmis par le sous-module de réception (111) satisfait la condition préétablie, et allumer le module d'émission de lumière (12) lorsque la condition préétablie est satisfaite.

5. Terminal selon la revendication 3 ou 4, dans lequel la touche de réveil de dormance (13) est une touche à effleurement sur un écran ou une touche physique de l'autre côté de l'écran.

6. Terminal selon la revendication 5, dans lequel la touche de réveil de dormance (13) est une touche de mise sous tension du terminal.

7. Terminal selon la revendication 3 ou 4, dans lequel le module d'émission de lumière (12) est un indicateur lumineux agencé adjacent à la touche de réveil de dormance.
